# FASCICULE DE BREVET EUROPEEN

(11) **EP 3 285 209 B1**
(45) Date de publication et mention de la délivrance du brevet: **03.08.2022**
(21) Numéro de dépôt: 17186966.2
(22) Date de dépôt: 18.08.2017
(51) Int. Cl.: H04W 12/08, G06V 20/52

(54) **PROCEDE DE SURVEILLANCE AU MOYEN D'UN SYSTEME MULTI-CAPTEUR**
ÜBERWACHUNGSVERFAHREN MITHILFE EINES MULTISENSOR-SYSTEMS
MONITORING METHOD USING A MULTI-SENSOR SYSTEM

(30) Priorité: 19.08.2016 FR 1657839
(43) Date de publication de la demande: 21.02.2018
(73) Titulaire: Idemia Identity & Security France, 92400 Courbevoie (FR)
(72) Inventeur: BAUDRY, Christelle, 92130 ISSY-LES-MOULINEAUX (FR); DESPIEGEL, Vincent, 92130 ISSY-LES-MOULINEAUX (FR)
(74) Mandataire: Idemia

(56) Documents cités:
- XIAOTAO ZOU ET AL: "Continuous Learning of a Multilayered Network Topology in a Video Camera Network", EURASIP JOURNAL ON IMAGE AND VIDEO PROCESSING, vol. 2009, 1 décembre 2009 (2009-12-01), pages 1-19, XP055362542, DE ISSN: 1687-5176, DOI: 10.1155/2009/460689
- YUNYOUNG NAM ET AL: "Inference topology of distributed camera networks with multiple cameras", MULTIMEDIA TOOLS AND APPLICATIONS., vol. 67, no. 1, 14 mars 2012 (2012-03-14), pages 289-309, XP055362524, US ISSN: 1380-7501, DOI: 10.1007/s11042-012-0997-0
- JAVED ET AL: "Modeling inter-camera space-time and appearance relationships for tracking across non-overlapping views", COMPUTER VISION AND IMAGE UNDERSTANDING, ACADEMIC PRESS, US, vol. 109, no. 2, 10 janvier 2008 (2008-01-10), pages 146-162, XP022416212, ISSN: 1077-3142, DOI: 10.1016/J.CVIU.2007.01.003
- KUAN-WEN CHEN ET AL: "Adaptive Learning for Target Tracking and True Linking Discovering Across Multiple Non-Overlapping Cameras", IEEE TRANSACTIONS ON MULTIMEDIA, IEEE SERVICE CENTER, PISCATAWAY, NJ, US, vol. 13, no. 4, 1 août 2011 (2011-08-01), pages 625-638, XP011479801, ISSN: 1520-9210, DOI: 10.1109/TMM.2011.2131639
- GUO HUIWEN ET AL: "A novel approach for global abnormal event detection in multi-camera surveillance system", 2015 IEEE INTERNATIONAL CONFERENCE ON INFORMATION AND AUTOMATION, IEEE, 8 août 2015 (2015-08-08), pages 73-78, XP033222349, DOI: 10.1109/ICINFA.2015.7279261 [extrait le 2015-09-28]
- Emanuel E. Zelniker ET AL: "Global Abnormal Behaviour Detection Using a Network of CCTV Cameras", The Eighth International Workshop on Visual Surveillance - VS2008, 29 septembre 2008 (2008-09-29), XP055005440, Marseilles (FR) Extrait de l'Internet: URL:http://hal.archives-ouvertes.fr/docs/0 0/32/56/02/PDF/VS2008-Oral-4b.pdf [extrait le 2011-08-23]
- ETIENNE CORVEE ET AL: "People detection and re-identification for multi surveillance cameras", VISAPP - INTERNATIONAL CONFERENCE ON COMPUTER VISION THEORY AND APPLICATIONS, 24 février 2012 (2012-02-24), page 656108, XP055460128,
- Mingli Song ET AL: "Sparse Camera Network for Visual Surveillance -- A Comprehensive Survey", , 2 février 2013 (2013-02-02), XP055460209, Extrait de l'Internet: URL:https://arxiv.org/pdf/1302.0446.pdf

## Description

La présente invention concerne le domaine de la surveillance de lieux comme par exemple les terminaux de transport (aéroports, gares, ports), les sites militaires, les sites industriels, les lieux publics...

### ETAT DE LA TECHNIQUE

Il est connu des systèmes de surveillance comportant un réseau de caméras qui sont réparties dans le lieu à surveiller.

Ces caméras sont associées à un dispositif de reconnaissance agencé pour détecter des caractéristiques d'individus présents dans les images capturées par les caméras et pour comparer les caractéristiques détectées avec des caractéristiques mémorisées dans une base de données en relation avec un identifiant des personnes à qui elles appartiennent. Ceci permet par exemple de suivre le cheminement d'un individu dans le lieu ou de reconnaître cet individu si l'identifiant mémorisé en rapport avec l'individu comprend des informations sur son identité.

De nombreux documents traitent des réseaux de caméras et l'apprentissage de la topologie du réseau par apprentisage comme le document Xiaotao Zou et al, « Continuous learning of a multi-layered network topology in a video camera network », Eurasip Journal on Image and Video Processing, Vol 2009, 1er décembre 2009, page 1 à 19, ISSN 1687-5176.

En outre, des méthodes de construction de trajectoires à partir de signatures de couleur de toute la zone suivie couleur sont connues des documents :
- Guo Huiwen et al, « A novel approach for global abnormal event détection in multi-camera surveillance system », 2015 IEEE International Conférence on Information and Automation, DOI 10.1109/ICIINFA.2015.7279261 ;
- Zelniker et al, « Global abnormal behaviour détection using a network of CCTV cameras », The Eigth International Workshop on Visual SSurveillance, VS2008, 29 septembre 2008, Marseille.

### OBJET DE L'INVENTION

Un but de l'invention est d'améliorer les performances de ces systèmes.

### BREF EXPOSE DE L'INVENTION

A cet effet, on prévoit, selon l'invention, un procédé de surveillance conforme à la revendication 1.

Ainsi, on dispose d'un historique des informations positionnelles et temporelles et la vérification de cohérence permet de détecter une anomalie de prise de vue. L'information positionnelle peut révéler par exemple : une modification du comportement des individus qui ne se déplacent plus de la même manière dans le champ d'au moins un des capteurs, un déplacement d'un des capteurs ou une tentative de fraude par présentation d'une photographie de taille réduite. L'information temporelle permet de confirmer que l'individu est bien le même ou de révéler une modification du comportement des individus (augmentation de la vitesse des individus), de la topographie du lieu (modification du cheminement possible entre deux capteurs par création ou fermeture d'une porte par exemple) : à partir des informations temporelles mémorisées, on peut par exemple calculer un temps minimal entre la détection des caractéristiques représentatives d'un individu par un premier capteur et la détection des caractéristiques représentatives de ce même individu par un deuxième capteur (si la zone couverte par le deuxième capteur n'est pas matériellement atteignable depuis la zone couverte par le premier capteur en moins d'un temps prédéterminé, un individu détecté dans la zone couverte par le premier capteur ne peut se trouver dans la zone couverte par le deuxième capteur qu'une fois ce temps écoulé). Il est possible d'effectuer un traitement statistique des informations positionnelles et temporelles pour déterminer une probabilité de présence réelle d'un individu ou d'un objet dans un endroit donné.

La cohérence peut être utilisée pour valider la détection d'un visage (un objet détecté dans l'image est-il un visage ou pas ?) et/ou la reconnaissance d'un visage (les caractéristiques biométriques d'un visage détecté dans une image sont-elles proches de celles d'un visage détecté dans une autre image ?). Par exemple, on augmente le score de détection (le score représentatif de la proximité de l'objet détecté avec un visage) s'il y a cohérence entre les informations positionnelles et temporelles nouvellement déterminées et les informations positionnelles et temporelles préalablement mémorisées, et on le dégrade dans le cas contraire. De la même manière pour la reconnaissance, on augmente le score de reconnaissance (le score représentatif de la proximité du visage détecté dans l'image avec un visage détecté dans une autre image) s'il y a cohérence entre les informations positionnelles et temporelles nouvellement déterminées et les informations positionnelles et temporelles préalablement mémorisées, et on le dégrade dans le cas contraire. Ceci peut être fait en appliquant une fonction de transformation du score, dépendant de la probabilité de cohérence. Cela a pour effet d'améliorer les performances globales de détection et/ou de reconnaissance.

Il pourrait être envisageable d'effectuer la reconnaissance d'un même individu dans plusieurs images à partir d'une texture du visage extraite des images fournies par les capteurs.

Cependant, de préférence, les caractéristiques biométriques comprennent des points caractéristiques de visage.

Ainsi, on préfère utiliser des points caractéristiques du visage (coins des yeux, commissures des lèvres, points du nez...) comme caractéristiques biométriques. Ceci améliore la reconnaissance des individus.

D'autres caractéristiques et avantages de l'invention ressortiront à la lecture de la description qui suit de modes de réalisation particuliers non limitatifs de l'invention.

### BREVE DESCRIPTION DES FIGURES

Il sera fait référence aux dessins annexés, parmi lesquels :

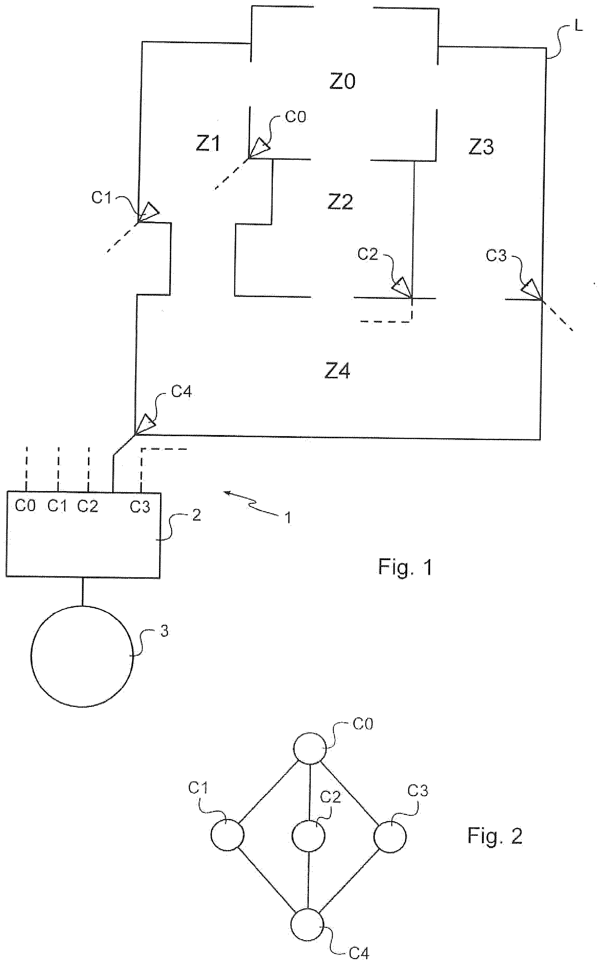

- la figure 1 est une vue schématique d'un lieu équipé d'un dispositif de suivi pour la mise en œuvre de l'invention ;
- la figure 2 est un vue d'une topographie représentative du lieu et exploitable pour la mise en œuvre de l'invention.

### DESCRIPTION DETAILLEE DE L'INVENTION

En référence aux figures, l'invention est ici décrite en application à la surveillance d'un lieu L, ici sous la forme d'un hangar, ayant des zones Z0, Z1, Z2, Z3, Z4, formant des halls dans le lieu L. La zone Z0 est un hall d'entrée du lieu L et la zone Z4 est le hall de sortie du lieu L. La zone Z0 communique avec les zones Z1, Z2, Z3 d'une part et avec l'extérieur du lieu L d'autre part. La zone Z1 communique avec les zones Z0 et Z4. La zone Z2 communique avec les zones Z0 et Z4. La zone Z3 communique avec les zones Z0 et Z4. La zone Z4 communique avec la zone Z1, la zone Z2 et la zone Z3. On note que : la zone Z4 est inaccessible directement depuis la zone Z0 et inversement ; la zone Z3 est inaccessible directement depuis la zone Z1 et inversement.

Chacune des zones Z0, Z1, Z2, Z3, Z4 est équipée d'au moins une caméra C0, C1, C2, C3, C4 agencée pour capturer des images des individus évoluant dans les zones Z0, Z1, Z2, Z3, Z4, images qui soient suffisamment définies pour qu'on puisse détecter des caractéristiques représentatives des individus se trouvant sur les images. Ces caractéristiques représentatives comprennent par exemple les vêtements, la coiffure, toutes caractéristiques biométriques dont notamment les lignes du visage. Dans la zone Z0, la caméra C1 est de préférence disposée au voisinage de l'entrée, d'un comptoir d'accueil ou de contrôle d'accès où tout individu pénétrant dans le lieu L est forcé de passer et éventuellement de présenter au moins un document attestant son identité ou une autorisation d'accès : on est donc assuré d'avoir une image de tout individu étant régulièrement entré dans le lieu L. De la même manière, la caméra C4 est de préférence disposée près de la sortie pour capturer des images de tout individu quittant régulièrement le lieu L.

Le procédé de l'invention est mis en œuvre au moyen d'un dispositif de reconnaissance biométrique et de suivi, généralement désigné en 1, comprenant une unité informatique de traitement 2 qui est reliée aux caméras C0, C1, C2, C3, C4 et qui est agencée pour traiter des données transmises par les caméras C0, C1, C2, C3, C4.

L'unité de traitement exécute un programme informatique de suivi d'individus. Le programme analyse les images capturées par les caméras C0, C1, C2, C3, C4, images qui lui sont transmises au fur et à mesure de leur capture.

Pour chaque zone, le programme est agencé pour détecter dans les images qui lui sont transmises des caractéristiques représentatives de chaque individu qui s'y trouve. Les caractéristiques représentatives sont ici des caractéristiques biométriques et plus particulièrement des caractéristiques biométriques de visage. Plus précisément, les caractéristiques biométriques de visage sont des positions de points caractéristiques du visage comme les coins des yeux, les commissures des lèvres, les points du nez... Le programme ici utilisé est agencé pour traiter chacune des images issues des capteurs pour en extraire les positions de ces points caractéristiques du visage sans tenir compte de la texture des visages.

Le programme est outre agencé pour mémoriser ces caractéristiques en association avec une information temporelle de détection, un identifiant d'individu et un identifiant de zone. L'information temporelle de détection permet de déterminer à quel moment (heure, minute, seconde) a été capturée l'image dans laquelle les caractéristiques représentatives ont été détectées. Avant la mémorisation des caractéristiques représentatives, il est procédé à une étape de reconnaissance consistant à comparer ces caractéristiques représentatives avec des caractéristiques représentatives préalablement mémorisées pour déterminer si l'individu détecté dans ladite zone a été détecté dans d'autres zones. La comparaison est réalisée par la mise en œuvre des techniques d'identification biométrique également appelées techniques de « matching » en calculant un score de proximité entre les caractéristiques biométriques et en comparant ce score à un seuil d'acceptation. Si le score de proximité entre des caractéristiques biométriques détectées dans une image d'un individu fournie par la caméra C0 et des caractéristiques biométriques détectées dans une image d'un individu fournie par la caméra C1 par exemple est supérieur au seuil d'acceptation, l'individu est considéré comme étant le même.

Ainsi, dans l'affirmative, les caractéristiques représentatives nouvellement détectées sont enregistrées en association avec l'identifiant préexistant ; dans la négative, les caractéristiques représentatives nouvellement détectées sont enregistrées en association avec un nouvel identifiant choisi ici arbitrairement. Il peut être possible de prévoir une étape de confirmation effectuée à partir d'une topographie du lieu par vérification d'une cohérence d'un trajet de l'individu d'une zone à l'autre et d'un modèle temporel par comparaison des informations temporelles de détection des caractéristiques représentatives dans les zones.

En théorie, les identifiants sont créés pour les individus nouvellement détectés dans les images capturées dans la zone Z0 (il n'y a pas d'entrée dans les autres zones) et les identifiants et les données associées sont supprimées lorsqu'on détecte la sortie des individus par la zone Z4.

L'unité de traitement permet ainsi de suivre automatiquement un individu dans ses déplacements dans le lieu L.

En parallèle, il est prévu un procédé de vérification permettant, à partir d'un historique d'informations positionnelles et d'informations temporelles déterminées à partir des images fournies par les caméras C0 à C4, de vérifier le bon déroulement de ce procédé de suivi.

Ce procédé de vérification comprend les étapes, mises en œuvre par l'unité de traitement, de :
- déterminer dans les images et mémoriser des informations positionnelles représentatives d'au moins une position des individus dont des caractéristiques biométriques ont été détectées ;
- lorsqu'un même individu est détecté dans des images d'au moins deux capteurs distincts, déterminer et mémoriser au moins une information temporelle représentative d'un temps intermédiaire entre les deux images ;
- vérifier une cohérence entre les informations positionnelles et temporelles nouvellement déterminées et les informations positionnelles et temporelles préalablement mémorisées.

Des informations positionnelles de plusieurs types sont ici déterminées :
- selon un premier type, l'information positionnelle représente la localisation de la zone de l'image couverte par le visage des individus,
- selon un deuxième type, l'information positionnelle déterminée à partir d'une succession d'images prises par une même caméra, représente une trajectoire de l'individu,
- selon un troisième type, l'information positionnelle représente la taille de la zone de l'image couverte par le visage des individus.

Bien entendu, d'autres informations positionnelles concernant par exemple tout ou partie du corps ou de la silhouette des individus sont envisageables.

L'information temporelle est ici le temps qui s'est écoulé entre la détection des caractéristiques représentatives par la première caméra et la détection des caractéristiques représentatives par la deuxième caméra.

Pour la détermination de l'information temporelle, un même individu est considéré comme étant présent dans des images d'au moins deux capteurs distincts lorsque le score de proximité entre les caractéristiques représentatives est supérieur à un seuil de validation lui-même supérieur au seuil d'acceptation utilisé dans le procédé de suivi décrit précédemment. En variante, il serait possible d'utiliser le même seuil. Le score de proximité est de préférence une distance de Mahalanobis.

Si différents types de caractéristiques représentatives sont utilisés (vêtements, caractéristiques biométriques...), le score de proximité est calculé en affectant une pondération aux caractéristiques représentatives en fonction de leur type.

En variante, le score de proximité est calculé en utilisant des algorithmes différents en fonction du type de caractéristiques biométriques. Une pondération est de préférence affectée à chaque algorithme utilisé pour le calcul du score de proximité.

Les informations positionnelles et temporelles préalablement mémorisées qui sont utilisées pour la vérification de cohérence ont été enregistrées pendant une phase d'enregistrement préalable telle qu'une phase d'apprentissage dédiée ou une phase d'enregistrement initiée au début de la mise en œuvre du procédé et interrompue une fois que le volume d'informations collectées est considéré comme suffisant d'un point de vue statistique. Cette phase d'enregistrement préalable des informations positionnelles et temporelles permet de constituer un modèle historique.

En mode de fonctionnement nominal, l'unité de traitement détermine les informations positionnelles et temporelles et les compare à celles mémorisées lors de la phase d'enregistrement préalable.

Cette comparaison est effectuée après un traitement statistique des informations mémorisées ayant permis de calculer pour chaque type d'information positionnelle et pour l'information temporelle une moyenne et un écart-type.

Concernant les informations positionnelles de premier type, la cohérence est vérifiée lorsque l'information positionnelle de premier type dernièrement déterminée est dans la moyenne des informations positionnelles de premier type mémorisées, en tenant compte de l'écart-type. Ceci signifie que la zone de l'image couverte par le visage des individus reste localisée sensiblement au même endroit que constaté lors de la phase d'enregistrement préalable.

Concernant les informations positionnelles de deuxième type, la cohérence est vérifiée lorsque l'information positionnelle de deuxième type dernièrement déterminée est dans la moyenne des informations positionnelles de deuxième type mémorisées, en tenant compte de l'écart-type. Ceci signifie que la trajectoire des individus reste sensiblement identique à ce qui a été constaté lors de la phase d'enregistrement préalable.

Concernant les informations positionnelles de troisième type, la cohérence est vérifiée lorsque l'information positionnelle de troisième type dernièrement déterminée est dans la moyenne des informations positionnelles de troisième type mémorisées, en tenant compte de l'écart-type. Ceci signifie que la zone de l'image couverte par le visage des individus reste sensiblement de la même taille que constatée lors de la phase d'enregistrement préalable.

Concernant les informations temporelles, la cohérence est vérifiée lorsque l'information temporelle dernièrement déterminée est dans la moyenne des informations temporelles mémorisées, en tenant compte de l'écart-type. Ceci signifie que le temps de passage du champ d'un capteur à l'autre reste sensiblement identique à celui constaté lors de la phase d'enregistrement préalable.

Par ailleurs, et de préférence, le procédé comprend l'étape de prendre en compte la cohérence des informations positionnelles et temporelles pour améliorer des performances en précision/justesse de l'opération de détection et/ou des performances en précision/justesse de l'opération de reconnaissance des individus.

Ainsi, pour améliorer les performances de détection et/ou de reconnaissance, le procédé comprend l'étape supplémentaire de modifier des scores de détection sur la base du modèle historique de détections créé (Où les objets ont-ils été vus ? Quelles tailles faisaient-ils ?...).

Les informations positionnelles et temporelles préalablement mémorisées permettent de calculer une probabilité pour une nouvelle détection de visage d'être présente à une position X avec une échelle S (on a stocké des positions des détections de visage dans l'image et leurs échelles associées, on peut donc en déduire une distribution). Cette distribution peut être utilisée pour modifier le score de probabilité de sortie de l'algorithme de détection par une multiplication des deux probabilités : la probabilité associée à l'état observé et la probabilité que la détection soit une vraie détection (renvoyé par l'algorithme de détection). Toute fonction dépendant de ces deux probabilités est également utilisable. Cela permet de donner plus de poids aux détections cohérentes avec le modèle appris et d'invalider les détections incohérentes (en résumé, on peut se permettre de ne pas travailler avec le même seuil d'acceptation selon que les détections sont cohérentes avec le modèle ou qu'elles ne le sont pas). On limite donc grandement les fausses détections (celles qui ne correspondant pas à des visages) tout en favorisant les détections correspondant effectivement à des visages.

De manière similaire, les informations positionnelles et temporelles préalablement mémorisées peuvent être utilisées pour pondérer les scores d'appariement par multiplication du score de probabilité de cohérence au modèle (l'écart temporel observé a une probabilité d'occurrence qui peut être calculé à partir du modèle appris grâce aux informations mémorisées) et du score d'association entre deux individus. Toute autre fonction dépendant de ces deux probabilités est également utilisable. Ceci permet de manière similaire d'améliorer les performances biométriques en pénalisant les associations incohérentes avec le modèle temporel (à titre d'exemple : dans un aéroport, il est peu probable qu'une personne ait 6h d'écart entre son passage à l'enregistrement des bagages et son passage dans la zone d'embarquement via le détecteur de métaux) et en favorisant celles en cohérence avec le modèle temporel. Ceci permet d'améliorer les performances biométriques globale dudit système et donc d'améliorer aussi le modèle.

Par ailleurs, le procédé comprend l'étape d'émettre une alerte lorsque les informations positionnelles et temporelles nouvellement déterminées et les informations positionnelles et temporelles préalablement mémorisées ne sont pas cohérentes.

Cette alerte est émise après qu'un écart durable est constaté entre les informations positionnelles et temporelles nouvellement déterminées et les informations positionnelles et temporelles préalablement mémorisées, c'est-à-dire que cet écart persiste sur une période de temps prédéterminé.

Un tel écart peut correspondre à :
- une modification du comportement des utilisateurs,
- une modification du réglage d'au moins un des capteurs,
- une modification de la topographie du lieu.

Ces modifications peuvent altérer les performances du procédé de suivi et il importe de les surveiller et d'en vérifier l'impact sur les performances du procédé de suivi. L'alerte déclenche l'intervention d'un opérateur qui recherchera l'existence d'un problème à ce niveau.

Après une alerte, une nouvelle phase d'enregistrement d'informations positionnelles et temporelles est lancée.

On notera qu'il est possible de traiter les informations positionnelles pour déterminer des positions relatives des caméras. Ceci permet, par exemple, de :
- déterminer si une caméra a bougé par exemple à la suite d'une mauvaise manipulation lors d'une opération de maintenance, ou d'un mauvais serrage d'un boulon la maintenant en place,
- déterminer si une caméra a une orientation particulière rendant nécessaire un traitement d'image pour améliorer la reconnaissance (par exemple si une caméra est en contreplongée, il est intéressant de déformer l'image pour redonner leur formes originelles aux visages qui s'y trouvent avant de lancer une opération de reconnaissance).

On peut également élaborer à partir de ces informations un suivi temporel des performances.

Bien entendu, l'invention n'est pas limitée aux modes de réalisation décrits mais englobe toute variante entrant dans le champ de l'invention telle que définie par les revendications.

En particulier, le procédé de l'invention est applicable à tout système de surveillance comprenant un réseau de capteurs disséminés dans un lieu et reliés à un dispositif de reconnaissance biométrique.

Les caractéristiques représentatives peuvent comprendre également d'autres caractéristiques en plus des caractéristiques biométriques et par exemple des caractéristiques des vêtements des individus.

## Revendications

1. Procédé de surveillance d'un lieu équipé d'un réseau de capteurs d'images reliés à un dispositif de reconnaissance biométrique agencé pour extraire des caractéristiques biométriques d'individus dans des images fournies par les capteurs et pour comparer les caractéristiques biométriques extraites d'images de capteurs distincts pour y détecter la présence d'un même individu en fonction d'un score de proximité entre les caractéristiques biométriques, le procédé comprenant les étapes, mises en œuvre par le dispositif biométrique, de :
- déterminer dans les images et mémoriser des informations positionnelles représentatives d'au moins une position des individus dont des caractéristiques biométriques ont été détectées, chaque information positionnelle étant déterminée en fonction de la taille de la zone de l'image couverte par le visage des individus ;
- lorsqu'un même individu est détecté dans des images d'au moins deux capteurs distincts, déterminer et mémoriser au moins une information temporelle représentative d'un temps intermédiaire entre les deux images ;
- vérifier une cohérence entre les informations positionnelles et temporelles nouvellement déterminées et les informations positionnelles et temporelles préalablement mémorisées pour détecter une anomalie de prise de vue.

2. Procédé selon la revendication 1, comprenant l'étape de prendre en compte la cohérence des informations positionnelles et temporelles pour améliorer des performances en précision/justesse de l'opération de détection et/ou des performances en précision/justesse de l'opération de reconnaissance des individus en augmentant/dégradant des scores de détection/reconnaissance d'un visage en fonction de la cohérence des informations positionnelles et temporelles.

3. Procédé selon la revendication 2, dans lequel les caractéristiques biométriques sont extraites de visages détectés dans les images et la prise en compte de la cohérence comprend une phase de calculer, à partir des informations positionnelles et temporelles préalablement mémorisées, une probabilité pour une nouvelle détection de visage d'être présente dans une image à une position et avec une échelle prédéterminées.

4. Procédé selon la revendication 2, dans lequel les scores de proximité sont pondérés en fonction des informations positionnelles et temporelles préalablement mémorisées de manière à prendre en compte la cohérence des informations positionnelles et temporelles.

5. Procédé selon l'une quelconque des revendications précédentes, comprenant l'étape d'émettre une alerte lorsque les informations positionnelles et temporelles nouvellement déterminées et les informations positionnelles et temporelles préalablement mémorisées ne sont pas cohérentes.

6. Procédé selon la revendication 5, dans lequel l'alerte est émise après qu'un écart durable est constaté entre les informations positionnelles et temporelles nouvellement déterminées et les informations positionnelles et temporelles préalablement mémorisées, c'est-à-dire que cet écart persiste sur une période de temps prédéterminée.

7. Procédé selon la revendication 5 ou la revendication 6, dans lequel les informations positionnelles et temporelles préalablement mémorisées qui sont utilisées pour la vérification de cohérence ont été enregistrées pendant une phase d'enregistrement préalable et, en cas d'alerte, une nouvelle phase d'enregistrement d'informations positionnelles et temporelles est lancée.

8. Procédé selon l'une quelconque des revendications précédentes, dans lequel l'information temporelle n'est déterminée et mémorisée que lorsque le score de proximité est supérieur à un seuil prédéterminé.

9. Procédé selon la revendication 1, dans lequel l'information positionnelle est déterminée en fonction de la localisation dans l'image de la zone de l'image couverte par le visage des individus.

10. Procédé selon l'une quelconque des revendications précédentes, dans lequel le score de proximité est une distance de Mahalanobis.

11. Procédé selon l'une quelconque des revendications précédentes, dans lequel plusieurs types de caractéristiques biométriques sont extraits des images.

12. Procédé selon la revendication 11, dans lequel le score de proximité est calculé en affectant une pondération aux caractéristiques biométriques en fonction de leur type.

13. Procédé selon la revendication 11, dans lequel le score de proximité est calculé en utilisant des algorithmes différents en fonction du type de caractéristiques biométriques.

14. Procédé selon la revendication 13, dans lequel une pondération est affectée à chaque algorithme utilisée pour le calcul du score de proximité.

15. Procédé selon l'une quelconque des revendications précédentes, dans lequel les caractéristiques biométriques comprennent des points caractéristiques de visage.

## Patentansprüche

1. Verfahren zur Überwachung eines Orts, der mit einem Netz von Bildsensoren ausgestattet ist, die mit einer biometrischen Erkennungsvorrichtung verbunden sind, die eingerichtet ist, um biometrische Merkmale von Personen in von den Sensoren gelieferten Bildern zu entnehmen und um die aus Bildern von separaten Sensoren entnommenen biometrischen Merkmale zu vergleichen, um darin abhängig von einem Näherungswert zwischen den biometrischen Merkmalen die Anwesenheit einer gleichen Person zu erfassen, wobei das Verfahren die folgenden von der biometrischen Vorrichtung durchgeführten Schritte enthält:
- Bestimmen in den Bildern und Speichern von Positionsinformationen, die für mindestens eine Position der Personen repräsentativ sind, deren biometrische Merkmale erfasst wurden, wobei jede Positionsinformation abhängig von der Größe der Zone des Bilds bestimmt wird, die vom Gesicht der Personen bedeckt wird;
- wenn eine gleiche Person in Bildern von mindestens zwei separaten Sensoren erfasst wird, Bestimmen und Speichern mindestens einer Zeitinformation, die für eine Zwischenzeit zwischen den zwei Bildern repräsentativ ist;
- Überprüfen einer Kohärenz zwischen den neu bestimmten Positions- und Zeitinformationen und den vorher gespeicherten Positions- und Zeitinformationen, um eine Bildaufnahmeanomalie zu erfassen.

2. Verfahren nach Anspruch 1, umfassend den Schritt der Berücksichtigung der Kohärenz der Positions- und Zeitinformationen, um Leistungen bezüglich der Präzision/Genauigkeit des Erfassungsvorgangs und/oder Leistungen bezüglich der Präzision/Genauigkeit des Vorgangs der Erkennung der Personen zu verbessern, indem Erfassungs-/Erkennungswerte eines Gesichts abhängig von der Kohärenz der Positions- und Zeitinformationen erhöht/herabgestuft werden.

3. Verfahren nach Anspruch 2, wobei die biometrischen Merkmale von in den Bildern erfassten Gesichtern entnommen werden und die Berücksichtigung der Kohärenz eine Phase enthält, ausgehend von den vorher gespeicherten Positions- und Zeitinformationen eine Wahrscheinlichkeit zu berechnen, dass eine neue Gesichtserfassung in einem Bild in einer vorbestimmten Position und mit einem vorbestimmten Maßstab vorhanden ist.

4. Verfahren nach Anspruch 2, wobei die Näherungswerte abhängig von den vorher gespeicherten Positions- und Zeitinformationen gewichtet werden, um die Kohärenz der Positions- und Zeitinformationen zu berücksichtigen.

5. Verfahren nach einem der vorhergehenden Ansprüche, umfassend den Schritt der Ausgabe eines Alarms, wenn die neu bestimmten Positions- und Zeitinformationen und die vorher gespeicherten Positions- und Zeitinformationen nicht kohärent sind.

6. Verfahren nach Anspruch 5, wobei der Alarm ausgegeben wird, nachdem eine dauerhafte Abweichung zwischen den neu bestimmten Positions- und Zeitinformationen und den vorher gespeicherten Positions- und Zeitinformationen festgestellt wurde, d.h., dass diese Abweichung über eine vorbestimmte Zeitperiode fortbesteht.

7. Verfahren nach Anspruch 5 oder Anspruch 6, wobei die vorher gespeicherten Positions- und Zeitinformationen, die zur Kohärenzprüfung verwendet werden, während einer vorhergehenden Speicherphase gespeichert wurden, und im Fall eines Alarms eine neue Phase der Speicherung von Positions- und Zeitinformationen gestartet wird.

8. Verfahren nach einem der vorhergehenden Ansprüche, wobei die Zeitinformation nur bestimmt und gespeichert wird, wenn der Näherungswert höher als eine vorbestimmte Schwelle ist.

9. Verfahren nach Anspruch 1, wobei die Positionsinformation abhängig von der Lokalisierung im Bild der Zone des Bilds, die vom Gesicht des Personen bedeckt wird, bestimmt wird.

10. Verfahren nach einem der vorhergehenden Ansprüche, wobei der Näherungswert ein Mahalanobis-Abstand ist.

11. Verfahren nach einem der vorhergehenden Ansprüche, wobei mehrere Typen von biometrischen Merkmalen aus den Bildern entnommen werden.

12. Verfahren nach Anspruch 11, wobei der Näherungswert berechnet wird, indem den biometrischen Merkmalen abhängig von ihrem Typ eine Gewichtung zugewiesen wird.

13. Verfahren nach Anspruch 11, wobei der Näherungswert berechnet wird, indem unterschiedliche Algorithmen abhängig vom Typ der biometrischen Merkmale verwendet werden.

14. Verfahren nach Anspruch 13, wobei jedem für die Berechnung des Näherungswerts verwendeten Algorithmus eine Gewichtung zugewiesen wird.

15. Verfahren nach einem der vorhergehenden Ansprüche, wobei die biometrischen Merkmale charakteristische Gesichtspunkte enthalten.

## Claims

1. Method for monitoring a site equipped with a network of image sensors connected to a biometric recognition device designed to extract biometric features of individuals from images provided by the sensors and to compare the extracted biometric features with images from different sensors in order to detect the presence of the same individual therein based on a proximity score between the biometric features, the method comprising the following steps, implemented by the biometric device:
- determining, in the images, and storing positional information representative of at least one position of the individuals whose biometric features have been detected, each item of positional information being determined based on the size of that region of the image covered by the face of the individuals;
- when the same individual is detected in images from at least two different sensors, determining and storing at least one item of temporal information representative of an intermediate time between the two images;
- checking consistency between the newly determined positional and temporal information and the previously stored positional and temporal information in order to detect an image capture anomaly.

2. Method according to Claim 1, comprising the step of taking into account the consistency of the positional and temporal information to improve the precision/correctness performance of the detection operation and/or the precision/correctness performance of the operation of recognizing the individuals by increasing/downgrading detection/recognition scores for a face based on the consistency of the positional and temporal information.

3. Method according to Claim 2, wherein the biometric features are extracted from faces detected in the images and taking into account the consistency comprises a phase of computing, based on the previously stored positional and temporal information, a probability of a new face detection being present in an image at a predetermined position and with a predetermined scale.

4. Method according to Claim 2, wherein the proximity scores are weighted based on the previously stored positional and temporal information so as to take into account the consistency of the positional and temporal information.

5. Method according to any one of the preceding claims, comprising the step of transmitting an alert when the newly determined positional and temporal information and the previously stored positional and temporal information are not consistent.

6. Method according to Claim 5, wherein the alert is transmitted after a durable deviation is observed between the newly determined positional and temporal information and the previously stored positional and temporal information, that is to say that this deviation persists over a predetermined period of time.

7. Method according to Claim 5 or Claim 6, wherein the previously stored positional and temporal information used for the consistency check was recorded during a preliminary recording phase and, in the event of an alert, a new positional and temporal information recording phase is launched.

8. Method according to any one of the preceding claims, wherein the temporal information is determined and stored only when the proximity score is greater than a predetermined threshold.

9. Method according to Claim 1, wherein the positional information is determined based on the location, in the image, of that area of the image covered by the face of the individuals.

10. Method according to any one of the preceding claims, wherein the proximity score is a Mahalanobis distance.

11. Method according to any one of the preceding claims, wherein multiple types of biometric features are extracted from the images.

12. Method according to Claim 11, wherein the proximity score is computed by assigning a weighting to the biometric features based on their type.

13. Method according to Claim 11, wherein the proximity score is computed using different algorithms based on the type of biometric features.

14. Method according to Claim 13, wherein a weighting is assigned to each algorithm used to compute the proximity score.

15. Method according to any one of the preceding claims, wherein the biometric features comprise characteristic points of a face.
